# EUROPEAN PATENT APPLICATION

(11) **EP 4 535 190 A1**
(43) Date of publication of application: **09.04.2025**
(21) Application number: 24201542.8
(22) Date of filing: 20.09.2024
(51) Int. Cl.: G06F 16/335

(54) **METHOD AND APPARATUS OF RETRIEVING DATA, AND METHOD AND APPARATUS OF TRAINING DEEP LEARNING MODEL**

(30) Priority: 08.04.2024 CN 202410417915
(71) Applicant: Beijing Baidu Netcom Science Technology Co., Ltd., Beijing 100085 (CN)
(72) Inventor: ZHANG, Jing, Beijing, 100085 (CN); ZHENG, Lei, Beijing, 100085 (CN); YU, Sheng, Beijing, 100085 (CN); XING, Guoliang, Beijing, 100085 (CN)
(74) Representative: Stöckeler, Ferdinand

(57) **Abstract**

The present disclosure provides a method and an apparatus of retrieving data, which relates to a field of artificial intelligence technology, and in particular to fields of natural language processing and deep learning technologies. A specific implementation method is: determining M candidate texts from a text library based on a semantic information in a query to be processed, where M is an integer greater than or equal to 1; determining N candidate texts from the text library based on a keyword information in the query to be processed, where N is an integer greater than or equal to 1; and determining at least one target text based on the M candidate texts and the N candidate texts. The present disclosure further provides a method and an apparatus of training a deep learning model, an electronic device, and a storage medium.

## Description

### TECHNICAL FIELD

The present disclosure relates to a field of artificial intelligence technology, and in particular to fields of natural language processing and deep learning technologies. More specifically, the present disclosure provides a method and an apparatus of retrieving data, a method and an apparatus of training a deep learning model, an electronic device, a storage medium, and a computer program product.

### BACKGROUND

When using a current retrieval system for retrieving a text such as a legal article and a document, a user needs to perform a precise or fuzzy retrieval according to a part of content in the text. Such retrieval method requires the user to be familiar with the content contained in the text, and then use a keyword of the content as a retrieval equation for retrieving.

However, in a case where the user is not familiar with the content in the text, it may be difficult to retrieve relevant content due to the inaccurate keyword used.

### SUMMARY

The present disclosure provides a method and an apparatus of retrieving data, a method and an apparatus of training a deep learning model, an electronic device, a storage medium, and a computer program product.

According to a first aspect, a method of retrieving data is provided, including: determining M candidate texts from a text library based on a semantic information in a query to be processed, where M is an integer greater than or equal to 1; determining N candidate texts from the text library based on a keyword information in the query to be processed, where N is an integer greater than or equal to 1; and determining at least one target text based on the M candidate texts and the N candidate texts.

According to a second aspect, a method of training a deep learning model is provided, where the deep learning model includes a query processing sub-model and a text processing sub-model, and the method includes: determining a positive example text of a sample query and a negative example text of the sample query; processing the sample query by using the query processing sub-model to obtain a semantic feature of the sample query; processing the positive example text and the negative example text by using the text processing sub-model to obtain a feature of the positive example text and a feature of the negative example text, respectively; determining a similarity between the sample query and the positive example text and a similarity between the sample query and the negative example text according to the semantic feature, the feature of the positive example text and the feature of the negative example text; determining a loss of the deep learning model according to the similarity between the sample query and the positive example text and the similarity between the sample query and the negative example text; and adjusting a parameter of the deep learning model according to the loss.

According to a third aspect, an apparatus of retrieving data is provided, including: a first candidate text determination module configured to determine M candidate texts from a text library based on a semantic information in a query to be processed, where M is an integer greater than or equal to 1; a second candidate text determination module configured to determine N candidate texts from the text library based on a keyword information in the query to be processed, where N is an integer greater than or equal to 1; and a target text determination module configured to determine at least one target text based on the M candidate texts and the N candidate texts.

According to a fourth aspect, an apparatus of training a deep learning model is provided, where the deep learning model includes a query processing sub-model and a text processing sub-model, and the apparatus includes: a sample determination module configured to determine a positive example text of a sample query and a negative example text of the sample query; a query processing module configured to process the sample query by using the query processing sub-model to obtain a semantic feature of the sample query; a text processing module configured to process the positive example text and the negative example text by using the text processing sub-model to obtain a feature of the positive example text and a feature of the negative example text, respectively; a similarity determination module configured to determine a similarity between the sample query and the positive example text and a similarity between the sample query and the negative example text according to the semantic feature, the feature of the positive example text and the feature of the negative example text; a loss determination module configured to determine a loss of the deep learning model according to the similarity between the sample query and the positive example text and the similarity between the sample query and the negative example text; and an adjusting module configured to adjust a parameter of the deep learning model according to the loss.

According to a fifth aspect, an electronic device is provided, including: at least one processor; and a memory communicatively connected to the at least one processor, where the memory stores instructions executable by the at least one processor, and the instructions, when executed by the at least one processor, are configured to cause the at least one processor to implement the methods provided by the present disclosure.

According to a sixth aspect, a non-transitory computer-readable storage medium having computer instructions stored thereon is provided, the computer instructions are configured to cause a computer to implement the methods provided by the present disclosure.

According to a seventh aspect, a computer program product is provided, including a computer program, where the computer program is stored on a readable storage medium and/or an electronic device, and the computer program, when executed by a processor, is configured to implement the methods provided by the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to understand the present disclosure better and do not constitute a limitation to the present disclosure, in which:
FIG. 1 shows an exemplary system architecture diagram to which a method of retrieving data and/or a method of training a deep learning model may be applied according to an embodiment of the present disclosure;
FIG. 2 shows a flowchart of a method of retrieving data according to an embodiment of the present disclosure;
FIG. 3 shows a schematic diagram of a method of retrieving data according to an embodiment of the present disclosure;
FIG. 4 shows a schematic diagram of a deep learning model according to an embodiment of the present disclosure;
FIG. 5 shows a schematic diagram of a deep learning model according to another embodiment of the present disclosure;
FIG. 6 shows a schematic diagram of a deep learning model according to another embodiment of the present disclosure;
FIG. 7 shows a flowchart of a method of training a deep learning model according to an embodiment of the present disclosure;
FIG. 8 shows a block diagram of an apparatus of retrieving data according to an embodiment of the present disclosure;
FIG. 9 shows a block diagram of an apparatus of training a deep learning model according to an embodiment of the present disclosure; and
FIG. 10 shows a block diagram of an electronic device of a method of retrieving data and/or a method of training a deep learning model according to an embodiment of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skill in the art should realize that various changes and modifications may be made to embodiments described herein without departing from the scope and spirit of the present disclosure. Likewise, for clarity and conciseness, descriptions of well-known functions and structures are omitted in the following description.

Some retrieval systems in professional fields store texts containing specialized knowledge. The retrieval systems in these professional fields may only provide convenient services for users who are familiar with the professional knowledge, and there will be a high threshold for non-professionals to use.

For example, with the popularization of the law, people's demand for legal consultation is becoming increasingly strong. The existing legal article retrieval system stores all legal texts. The user may perform a precise or fuzzy retrieval in the system according to a part of content of the legal article, or directly view the entire legal text.

However, the existing legal article retrieval system only targets legal professionals such as lawyers, who may retrieve complete and authoritative legal articles based on a known legal article of a certain law. However, for non-professionals who do not understand the law, they may not be able to retrieve relevant legal articles due to inaccurate keywords. Therefore, it is not possible to assist non-professionals in retrieving legal documents without understanding the law.

In the technical solution of the present disclosure, the collection, storage, use, processing, transmission, provision, and disclosure of the personal information of the user involved are all in compliance with the relevant laws and regulations, and do not violate the public order and good customs.

In the technical solution of the present disclosure, the authorization or consent of the user is acquired before the personal information of the user is acquired or collected.

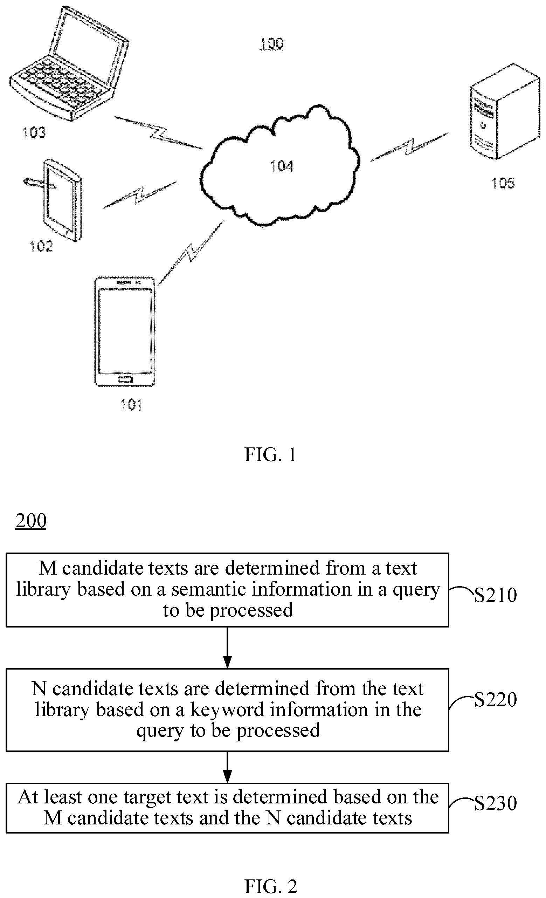

FIG. 1 is an exemplary system architecture diagram to which a method of retrieving data and/or a method of training a deep learning model may be applied according to an embodiment of the present disclosure. It should be noted that FIG. 1 is only an example of system architectures in which embodiments of the present disclosure may be applied to help those skilled in the art understand the technical content of the present disclosure, but it does not mean that embodiments of the present disclosure may not be used in other devices, systems, environments or scenarios.

As shown in FIG. 1, a system architecture 100 according to this embodiment may include terminal devices 101, 102, 103, a network 104, and a server 105. The network 104 is used as a medium to provide communication links between the terminal devices 101, 102, 103 and the server 105. The network 104 may include various types of connections, such as wired and/or wireless communication links, and the like.

The terminal devices 101, 102 and 103 may be used by a user to interact with the server 105 through the network 104 to receive or send messages, etc. The terminal devices 101, 102, and 103 may be various electronic devices, including but not limited to smartphones, tablets, laptops, and the like.

The method of retrieving data provided in embodiments of the present disclosure may generally be executed by the terminal devices 101, 102, and 103. Correspondingly, the apparatus of retrieving data provided in embodiments of the present disclosure may generally be provided in the terminal devices 101, 102, and 103.

The method of training the deep learning model provided in embodiments of the present disclosure may generally be executed by the server 105. Correspondingly, the apparatus of training the deep learning model provided in embodiments of the present disclosure may generally be provided in the server 105.

FIG. 2 shows a flowchart of a method of retrieving data according to an embodiment of the present disclosure.

As shown in FIG. 2, a method 200 of retrieving data includes operations S210 to S230.

In operation S210, M candidate texts are determined from a text library based on a semantic information in a query to be processed.

The query to be processed (Query) may contain a question, a description of an event, and a keyword of a content to be searched. For example, in a legal retrieval system, the query to be processed may contain a question such as what is the legal age for marriage, a description of the event such as how someone should be sentenced for doing something, and a keyword such as Article 1 of the Civil Law.

For the question and the description of the event contained in the query to be processed, M candidate texts may be selected from the text library based on the semantic information. M is an integer greater than or equal to 1. The text library may be a legal text database. The legal text database may contain texts of all legal articles that the retrieval system may cover.

In an example, non-legal professionals may simply input the question to be queried or the event information to be queried, without containing a keyword of a legal article. According to the semantics of the question or the event, the corresponding legal article may be recalled from the text library.

In operation S220, N candidate texts are determined from the text library based on a keyword information in the query to be processed.

For the keyword contained in the query to be processed, such as at least one keyword or expression in the title or content of a legal article, N candidate texts may be selected from the text library based on the keyword information. N is an integer greater than or equal to 1.

In an example, if the user specifies which legal article she/he wants to query, or if the user is familiar with a part of the content contained in a legal article, he may input the keyword of the title or content of that legal article he wants to query. Based on the keyword information, the corresponding legal article may be recalled from the text library.

In an example, the query to be processed may contain at least one of the question, the description of the event, or the keyword of the legal article. Two recall paths with different focuses may be provided in embodiments. One path may focus on recalling the candidate texts from the text library based on the semantic information of the question and the event in the query to be processed. The other path may focus on recalling the candidate texts from the text library based on the keyword information in the query to be processed.

In operation S230, at least one target text is determined based on the M candidate texts and the N candidate texts.

In an example, the recall path based on the semantic information and the recall path based on the keyword information may serve as coarse ranking (Pre-ranking) paths. The recalled M candidate texts and the recalled N candidate texts may serve as coarse ranking results. In embodiments, a fine ranking (Ranking) path may be further provided for re-ranking the M candidate texts and the N candidate texts to obtain a fine ranking result. The target text is selected from the fine ranking result as the retrieval result. The retrieval result may be presented to the user.

In embodiments of the present disclosure, a plurality of candidate texts are recalled based on the semantic information of the query to be processed and the keyword information in the query to be processed, and then at least one target text is determined from the plurality of candidate texts. Candidate texts for queries containing the question and event may be recalled based on the semantic information, candidate texts for queries containing the keyword may be recalled based on the keyword information, and then at least one target text is determined based on the candidate texts, thereby improving the accuracy of retrieval.

Embodiments of the present disclosure are applied to the retrieval of legal articles and may provide a legal article retrieval system that may retrieve relevant legal articles based on the semantics of questions and events, reducing the threshold for non-legal professionals to use.

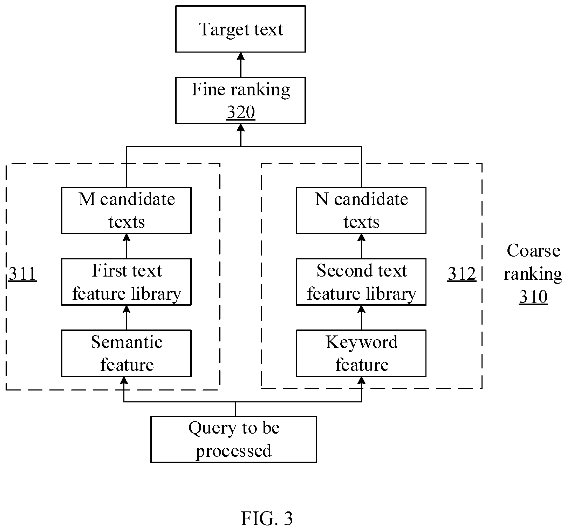

FIG. 3 shows a schematic diagram of a method of retrieving data according to an embodiment of the present disclosure.

As shown in FIG. 3, the query to be processed Query may contain at least one of the question, the description of the event, or the one or more keywords of the legal article. The one or more keywords of the legal article includes a keyword in a title of a legal article and/or a keyword in a content of a legal article.

The method of retrieving data in this embodiment includes two stages: a coarse ranking stage 310 and a fine ranking stage 320. In the coarse ranking stage 310, there are two paths, namely a path 311 and a path 312. In the path 311, the text is recalled based on the semantic information of the question and the event in the query to be processed Query. In the path 312, the text is recalled based on the keyword information in the query to be processed Query. Two paths may use respective trained deep learning models to recall the texts, and their respective deep learning models may be two-tower models.

For example, in the path 311, a trained first deep learning model is used to recall the text. The first deep learning model may be a two-tower model, including a first query processing sub-model and a first text processing sub-model. The trained first deep learning model may separate the two towers to obtain the independent first query processing sub-model and the independent first text processing sub-model. The independent first query processing sub-model and the independent first text processing sub-model may be deployed offline to recall the text in an offline state, which may improve the retrieval efficiency.

According to an embodiment of the present disclosure, the text in the text library is processed by using the first deep learning model to obtain a feature of the text in the text library; and a first text feature library is generated according to the feature of the text in the text library.

For example, the first text processing sub-model may be used to perform a feature extraction on the text in the text library to obtain the text feature of each text in the text library. Such text features are saved to obtain the first text feature library. The features of the texts in the text library may be pre-stored to be used directly in an offline state, avoiding the need for online extraction each time it is used. In the offline state, the text feature may be directly obtained from the text feature library for matching, which may improve the retrieval efficiency.

According to an embodiment of the present disclosure, determining M candidate texts includes: determining a semantic feature of the query to be processed; matching the semantic feature with a text feature in a first text feature library to obtain M first target text features, where the text feature in the first text feature library is obtained by processing a text in the text library using a first deep learning model, the first deep learning model is trained based on a similarity between a semantic feature of a sample query and a text feature of a sample text; and determining the M candidate texts from the text library based on the M first target text features.

The first query processing sub-model may be used to process the query to be processed Query to obtain the semantic feature of the query to be processed Query. The semantic feature of the query to be processed Query may be matched with the first text feature library to obtain M first target text features with the highest similarity. The text feature in the first text feature library corresponds to the text in the text library. After obtaining the M first target text features, the M candidate texts corresponding to the M first target text features may be selected from the text library.

The first deep learning model is trained based on the similarity between the semantic feature of the sample query and the text feature of the sample text. For example, in the training process, the first query processing sub-model processes the sample query to obtain the semantic feature of the sample query. The first text processing sub-model processes the sample text to obtain the text feature of the sample text. The model is trained according to the similarity between the semantic feature of the sample query and the text feature of the sample text. In the training process, the similarity between the semantic feature of the sample query and the text feature of the positive sample text is increased (e.g., close to 1), and the similarity between the semantic feature of the sample query and the text feature of the negative sample text is decreased (e.g., close to 0).

Therefore, using the first deep learning model trained as described above, the M candidate texts with the highest similarity to the query to be processed may be selected based on the similarity between the semantic feature of the query to be processed and the text feature in the first text feature library.

For example, in the path 312, a trained second deep learning model is used to recall the text. The second deep learning model may be a two-tower model, including a second query processing sub-model and a second text processing sub-model. The trained second deep learning model may separate the two towers to obtain the independent second query processing sub-model and the independent second text processing sub-model. The independent second query processing sub-model and the independent second text processing sub-model may be deployed offline to recall the text in an offline state, which may improve the retrieval efficiency.

According to an embodiment of the present disclosure, the title and the content are processed separately by using the second deep learning model, so as to obtain a title feature and a content feature; and a second text feature library is generated according to the title feature and the content feature.

For example, the text in the text library may include the title and the content. The title of the text and the content of the text in the text library are separated, and the trained second text processing sub-model is used to perform a feature extraction on the title and the content separately, so as to obtain the title feature and the content feature. Then the title feature and the content feature are combined to obtain the text feature. The text features of all texts in the text library are saved to obtain the second text feature library. The features of the texts in the text library may be pre-stored to be used directly in an offline state, avoiding the need for online extraction each time it is used. In the offline state, the text feature may be directly obtained from the text feature library for matching, which may improve the retrieval efficiency.

In the path 312, the text is recalled based on the keyword information in the query to be processed Query. The keywords include a title keyword and a content keyword. In embodiments, feature extraction is performed on the title of the text and the content of the text in the text library to obtain the title feature and the content feature, respectively, and then the title feature and the content feature are stored as the second text feature library. Based on the second text feature library, the corresponding feature may be determined from the second text feature library regardless of whether the user input the title keyword or the content keyword, thereby recalling the corresponding text.

According to an embodiment of the present disclosure, determining N candidate texts includes: determining a keyword feature in the query to be processed; matching the keyword feature with a text feature in a second text feature library to obtain N second target text features, where the text feature in the second text feature library is obtained by processing a text in the text library using a second deep learning model, and the second deep learning model is trained based on a similarity between a keyword feature of a sample query and a text feature of a sample text; and determining the N candidate texts from the text library according to the N second target text features.

The second query processing sub-model may be used to process the query to be processed Query to obtain the keyword feature of the query to be processed Query. The keyword feature of the query to be processed Query may be matched with the second text feature library to obtain N second target text features with the highest similarity. The text feature in the second text feature library corresponds to the text in the text library. After obtaining the N second target text features, the N candidate texts corresponding to the N second target text features may be selected from the text library.

The second deep learning model is trained based on the similarity between the keyword feature of the sample query and the text feature of the sample text. For example, in the training process, the second query processing sub-model processes the sample query to obtain the keyword feature of the sample query. The second text processing sub-model processes the sample text to obtain the text feature of the sample text. The model is trained according to the similarity between the keyword feature of the sample query and the text feature of the sample text. In the training process, the similarity between the keyword feature of the sample query and the text feature of the positive sample text is increased (e.g., close to 1), and the similarity between the keyword feature of the sample query and the text feature of the negative sample text is decreased (e.g., close to 0).

Therefore, using the second deep learning model trained as described above, the N candidate texts with the highest similarity to the query to be processed Query may be selected based on the similarity between the keyword feature of the query to be processed and the text feature in the second text feature library.

After obtaining the M candidate texts recalled in the path 311 and the N candidate texts recalled in the path 312, fine ranking 320 may be performed on the M candidate texts and the N candidate texts. The fine ranking 320 may use a trained third deep learning model to re-rank the M candidate texts and the N candidate texts to obtain the fine ranking result. The fine ranking result is ranked according to a new similarity, and at least one candidate text with the highest similarity may be selected from the fine ranking result as the target text.

In embodiments of the present disclosure, the accuracy of the retrieval may be improved by using two coarse ranking paths to recall the plurality of candidate texts and using the fine ranking path to select the target text from the candidate texts.

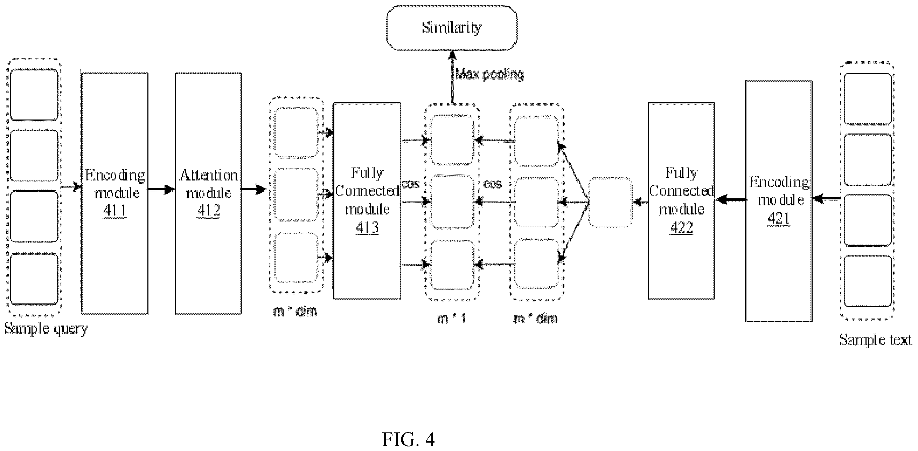

FIG. 4 shows a schematic diagram of a deep learning model according to an embodiment of the present disclosure.

As shown in FIG. 4, the deep learning model in this embodiment may be a model that recalls the text in the text library based on the semantic information of the query

Query. The deep learning model may be a two-tower model.

The two towers of the deep learning model include a first query processing sub-model and a first text processing sub-model. The first query processing sub-model includes an encoding module 411, an attention module 412, and a fully connected module 413. The first text processing sub-model includes an encoding module 421 and a fully connected module 422. Compared to the first text processing sub-model, the first query processing sub-model adds the attention module 412 after the encoding module 411. Therefore, the two towers of the deep learning model are asymmetric.

According to an embodiment of the present disclosure, a query feature of the query to be processed is determined; attention processing is performed on the query feature to obtain an attention feature; and the semantic feature of the query to be processed is determined according to the attention feature.

For example, the sample query is input into the encoding module 411 to obtain the query feature. The query feature is input into the attention module 412 to obtain the attention feature. The attention module 412 is used to perform self-attention processing on the query feature to obtain a multi-dimensional attention feature (such as m dimensions, where m is an integer greater than 1), so that the feature information is more abundant. The multi-dimensional attention feature is input into the fully connected module 413 to obtain the semantic feature.

For example, the sample text includes a positive example text that matches the sample query and a negative example text that does not match the sample query. In an example, the positive and negative example texts may be labeled for each sample query. Furthermore, for each sample query in a batch of sample queries, the positive and negative example texts of other sample queries in the batch may serve as negative example texts of the current sample query. For example, a batch of sample queries has k (k is an integer greater than 1) sample queries, and each sample query is labeled with one positive example text and one negative example text. In the training process, the sample organization format for each round of training input includes the sample query, the positive example text, and (2k-1) negative example texts.

The deep learning model addresses the matching of semantics and texts, which is more difficult than matching keywords and texts. Therefore, labeling positive and negative example texts for the sample query and using the positive and negative example texts of other sample queries as negative example texts of the current sample query may increase the number of samples of the deep learning model, so that the learning of the deep learning model is more sufficient, thereby improving the matching ability of the deep learning model.

For example, in each round of training, the sample query is input into the first query processing sub-model to obtain the semantic feature. The positive example text and (2k-1) negative example texts of the sample query are input into the encoding module 421 to obtain an initial feature of each sample text. The initial feature of each sample text is then input into the fully connected module 422 to obtain the text feature of each sample text.

As the attention module 412 of the first query processing sub-model processes the query feature into the multi-dimensional attention feature, the semantic feature output by the fully connected module 413 is also multi-dimensional. In order to match the semantic feature with the text feature, the text feature may also be processed to be multi-dimensional. Therefore, the similarity (such as cosine similarity cos) is calculated between the multi-dimensional semantic feature and the multi-dimensional text feature to obtain a similarity vector in one dimension. Then max pooling is performed on the similarity vector to obtain the final similarity evaluation value.

In an example, the similarity between the sample query and the positive example text as well as the similarity between the sample query and each negative example text may be calculated. A loss function of the deep learning model may be constructed with the goal of maximizing the difference between the similarity between the sample query and the positive example text and the similarity between the sample query and the negative example text. The similarity between the sample query and the positive example text and the similarity between the sample query and each negative example text may be input into the loss function to obtain the loss of the deep learning model, and the parameter of each module of the deep learning model may be adjusted based on the loss.

The trained deep learning model may recall the candidate text with the highest matching degree with the semantic of the query by matching the semantic feature of the query with the text feature in the text library.

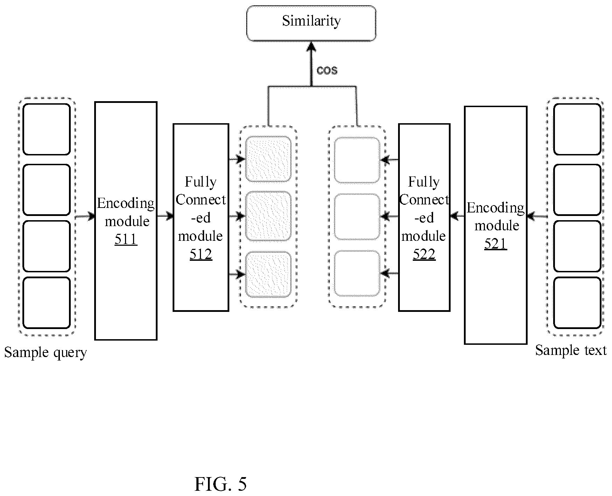

FIG. 5 shows a schematic diagram of a deep learning model according to another embodiment of the present disclosure.

As shown in FIG. 5, the deep learning model in this embodiment may be a model that recalls the text in the text library based on the keyword information of the query Query. The deep learning model may also be a two-tower model.

The two towers of the deep learning model include a second query processing sub-model and a second text processing sub-model. The second query processing sub-model includes an encoding module 511 and a fully connected module 512. The second text processing sub-model includes an encoding module 521 and a fully connected module 522. The second query processing sub-model is symmetrical with the second text processing sub-model.

For example, the sample query is input into the encoding module 511 to obtain the query feature. The query feature is input into the fully connected module 512 to obtain the keyword feature.

For example, the sample text includes a positive example text that matches the sample query and a negative example text that does not match the sample query. In an example, the positive example text may be labeled for each sample query. Furthermore, for each sample query in a batch of sample queries, the positive example texts of other sample queries in the batch may serve as negative example texts of the current sample query. In the training process, the sample organization format for each round of training input includes a sample pair composed of the sample query and the positive example text and a sample pair composed of the sample query and each negative example text.

For example, in each round of training, the sample query is input into the second query processing sub-model to obtain the keyword feature. The sample text (positive or negative example text) of the sample query is input into the encoding module 521 to obtain the initial feature of the sample text. The initial feature of the sample text is then input into the fully connected module 522 to obtain the text feature of the sample text. Next, the similarity (such as the cosine similarity cos) between the keyword feature of the sample query and the text feature of the sample text is calculated to obtain the similarity evaluation value. For the sample text belonging to the positive example text, the goal is to maximize the similarity between the sample query and the positive example text for model training, and for the sample text belonging to the negative example text, the goal is to minimize the similarity between the sample query and the negative example text for model training, so as to obtain a trained deep learning model.

The trained deep learning model may recall the candidate text with the highest matching degree with the keyword of the query by matching the keyword feature of the query with the text feature in the text library.

According to an embodiment of the present disclosure, determining at least one target text includes: concatenating, for each candidate text, the query to be processed and the candidate text to obtain a concatenated text; determining a similarity between the query to be processed and each candidate text according to the concatenated text; and determining at least one target text from the M candidate texts and the N candidate texts according to the similarity between the query to be processed and each candidate text.

The M candidate texts recalled based on the semantic information in the query and the N candidate texts recalled based on the keyword information in the query are not comparable due to the use of different recall paths, making it impossible to select candidate texts that better meet the user needs. Therefore, the trained deep learning model may be used to perform a fine ranking on the M candidate texts and the N candidate texts to obtain at least one target text.

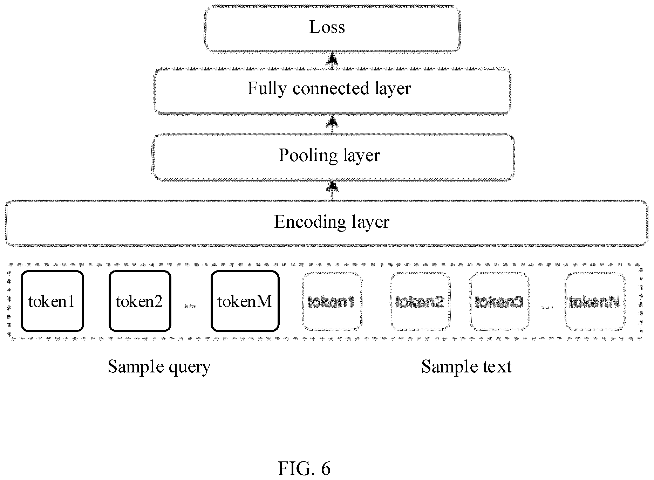

FIG. 6 shows a schematic diagram of a deep learning model according to another embodiment of the present disclosure.

As shown in FIG. 6, the deep learning model may be used for fine ranking of the plurality of candidate texts. This deep learning model may be obtained by fine-tuning a pretrained natural language processing model. The model may be a single-tower model, including an encoding layer, a pooling layer, and a fully connected layer.

For example, in the training phase, the deep learning model may acquire the sample query. The sample query is labeled with a corresponding text, which is the sample text. The sample query and the sample text are concatenated, and the concatenated sample query and sample text is input into the encoding layer, so as to obtain the encoding features token 1... tokenM of the sample query and the encoding features token 1 ... tokenN of the sample text. The encoding features of the sample query and the encoding features of the sample text are input into the pooling layer to obtain a pooling feature. Then, the pooling feature is input into the fully connected layer to obtain the similarity between the sample query and the sample text. The loss may be calculated based on the similarity, and the parameter of the deep learning model may be adjusted based on the loss.

In an example, in order to better model the correlation between the query and the text, the input of the model may be constructed by adding an identifier. For example, the identifier may be added between the sample query and the sample text to distinguish them. It is also possible to implicitly add the identifier, and use separate identifiers for encoding and training of the sample query and the sample text. For example, an identifier of the sample query is 0, and an identifier of the sample text is 1.

For example, in the application phase, the trained deep learning model may concatenate the query to be processed and each candidate text of the plurality of candidate texts to obtain a plurality of concatenated texts. Then, these concatenated texts are input into the trained deep learning model to obtain the similarity between the query to be processed and each candidate text. Re-ranking is performed based on the similarities to obtain the fine ranking result of the plurality of candidate texts. At least one candidate text with the highest similarity may be selected from the fine ranking result as the target text.

In embodiments of the present disclosure, the accuracy of the retrieved target text may be improved by using the trained deep learning model to perform the fine ranking on the candidate texts and selecting the target text from the fine ranking result.

According to an embodiment of the present disclosure, the present disclosure further provides a method of training a deep learning model.

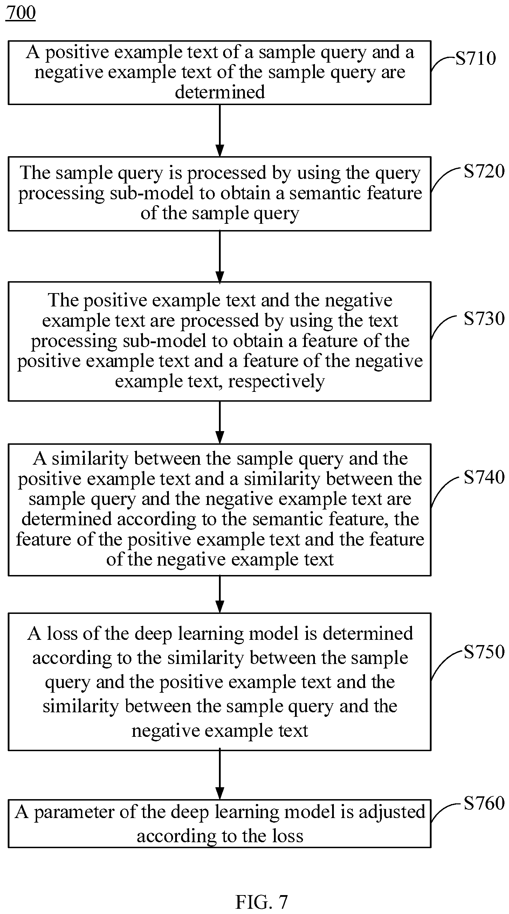

FIG. 7 shows a flowchart of a method of training a deep learning model according to an embodiment of the present disclosure.

As shown in FIG. 7, a method 700 of training a deep learning model includes operations S710 to S760. The deep learning model in the embodiment of the present disclosure may be a two-tower model, which includes a query processing sub-model and a text processing sub-model. The model may be trained based on a similarity between a semantic feature of a sample query and a text feature of a sample text.

In operation S710, a positive example text of a sample query and a negative example text of the sample query are determined.

For example, the sample text of the sample query includes the positive example text and the negative example text. The positive example text is a text that matches the sample query, and the negative example text is a text that does not match the sample query.

In operation S720, the sample query is processed by using the query processing sub-model to obtain a semantic feature of the sample query.

For example, the sample query is input into the query processing sub-model, and the query processing sub-model performs a feature extraction on the sample query to obtain the query feature of the sample query. Then an attention processing is performed on the query feature to obtain the attention feature. The semantic feature of the sample query may be obtained based on the attention feature.

In operation S730, the positive example text and the negative example text are processed by using the text processing sub-model, so as to obtain a feature of the positive example text and a feature of the negative example text.

For example, the positive example text and the negative example text are input into the text processing sub-model, and the text processing sub-model performs a feature extraction on each sample text, so as to obtain the feature of the positive example text and the feature of the negative example text.

In operation S740, a similarity between the sample query and the positive example text and a similarity between the sample query and the negative example text are determined according to the semantic feature, the feature of the positive example text and the feature of the negative example text.

For example, the similarity between the sample query and the positive example text as well as the similarity between the sample query and the negative example text may be calculated.

In operation S750, a loss of the deep learning model is determined according to the similarity.

In operation S760, a parameter of the deep learning model is adjusted according to the loss.

A loss function of the deep learning model may be constructed with the goal of maximizing the difference between the similarity between the sample query and the positive example text and the similarity between the sample query and the negative example text. The similarity between the sample query and the positive example text and the similarity between the sample query and the negative example text may be input into the loss function to obtain the loss of the deep learning model, and the parameter of each module of the deep learning model may be adjusted based on the loss.

In embodiments of the present disclosure, the deep learning model is trained using the sample query, the positive example text, and the negative example text. As the deep learning model is trained based on the similarity between the sample query and the positive example text and the similarity between the sample query and the negative example text, the trained deep learning model may match the query to be processed with the texts in the text library, so as to obtain the retrieval result that matches with the query to be processed.

According to an embodiment of the present disclosure, the query processing sub-model includes an encoding module, an attention module, and a fully connected module. The operation S720 includes: inputting the sample query into the encoding module to obtain a query feature of the sample query; inputting the query feature into the attention module to obtain an attention feature of the sample query; and inputting the attention feature into the fully connected module to obtain the semantic feature of the sample query.

The sample query is input into the encoding module to obtain the query feature. The query feature is input into the attention module to obtain the attention feature. The attention module is used to perform a self-attention processing on the query feature to obtain the multi-dimensional attention feature, so that the feature information is more abundant. The multi-dimensional attention feature is input into the fully connected module to obtain the semantic feature.

According to embodiments of the present disclosure, for each sample query in a batch of sample queries, the negative example text of the sample query as well as the positive and negative example texts of other sample queries among the plurality of sample queries other than the sample query are determined as the set of negative example texts of the sample query.

For example, a batch of sample queries has k (k is an integer greater than 1) sample queries, and each sample query is labeled with one positive example text and one negative example text. For each sample query, the negative example text of the sample query and positive and negative example texts of other sample queries serve as the negative example texts of the sample query. The sample query has a total of (2k-1) negative example texts, which serve as a set of the negative example texts of the sample query. In the training process, the sample organization format for each round of training input includes the sample query, the positive example text, and (2k-1) negative example texts.

According to an embodiment of the present disclosure, the operation S730 includes: processing the positive example text and each negative example text in the set of negative example texts by using the text processing sub-model to obtain the feature of the positive example text and a feature of each negative example text in the set of negative example texts, respectively. The operation S750 includes: determining the loss of the deep learning model according to the similarity between the sample query and the positive example text and a similarity between the sample query and each negative example text in the set of negative example texts.

For example, in each round of training, the sample query is input into the query processing sub-model to obtain the semantic feature. The positive example text and (2k-1) negative example texts of the sample query are input into the text processing sub-model to obtain the text feature of each sample text. The similarity between the sample query and the positive example text as well as the similarity between the sample query and each negative example text may be calculated. A loss function of the deep learning model may be constructed with the goal of maximizing the difference between the similarity between the sample query and the positive example text and the similarity between the sample query and the negative example text. The similarity between the sample query and the positive example text and the similarity between the sample query and each negative example text may be input into the loss function to obtain the loss of the deep learning model, and the parameter of each module of the deep learning model may be adjusted based on the loss.

In embodiments of the present disclosure, the number of samples of the deep learning model may be increased by using the positive and negative example texts of other sample queries in the batch of sample queries as the negative example texts of the current sample query, so that the learning of the deep learning model is more sufficient, thereby improving the matching ability of the deep learning model.

According to an embodiment of the present disclosure, the present disclosure further provides an apparatus of retrieving data and an apparatus of training a deep learning model.

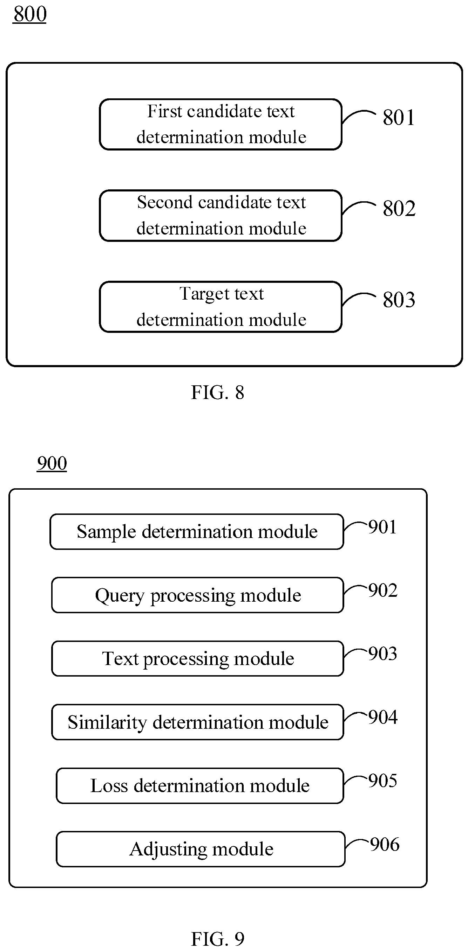

FIG. 8 shows a block diagram of an apparatus of retrieving data according to an embodiment of the present disclosure.

As shown in FIG. 8, an apparatus 800 of retrieving data includes a first candidate text determination module 801, a second candidate text determination module 802, and a target text determination module 803.

The first candidate text determination module 801 is used to determine M candidate texts from a text library based on a semantic information in a query to be processed, where M is an integer greater than or equal to 1.

The second candidate text determination module 802 is used to determine N candidate texts from the text library based on a keyword information in the query to be processed, where N is an integer greater than or equal to 1.

The target text determination module 803 is used to determine at least one target text based on the M candidate texts and the N candidate texts.

The first candidate text determination module 801 includes a semantic feature determination unit, a first matching unit, and a first candidate text determination unit.

The semantic feature determination unit is used to determine a semantic feature of the query to be processed.

The first matching unit is used to match the semantic feature with a text feature in a first text feature library to obtain M first target text features, where the text feature in the first text feature library is obtained by processing a text in the text library using a first deep learning model, and the first deep learning model is trained based on a similarity between a semantic feature of a sample query and a text feature of a sample text.

The first candidate text determination unit is used to determine the M candidate texts from the text library based on the M first target text features.

The semantic feature determination unit includes a query feature determination sub-unit, an attention feature determination sub-unit, and a semantic feature determination sub-unit.

The query feature determination sub-unit is used to determine a query feature of the query to be processed.

The attention feature determination sub-unit is used to perform an attention processing on the query feature to obtain an attention feature.

The semantic feature determination sub-unit is used to determine the semantic feature of the query to be processed according to the attention feature.

The apparatus 800 of retrieving data further includes a first text feature determination module and a first text feature library generation module.

The first text feature determination module is used to process the text in the text library by using the first deep learning model to obtain a feature of the text in the text library.

The first text feature library generation module is used to generate the first text feature library according to the feature of the text in the text library.

The second candidate text determination module 802 includes a keyword feature determination unit, a second matching unit, and a second candidate text determination unit.

The keyword feature determination unit is used to determine a keyword feature in the query to be processed.

The second matching unit is used to match the keyword feature with a text feature in a second text feature library to obtain N second target text features, where the text feature in the second text feature library is obtained by processing a text in the text library using a second deep learning model, and the second deep learning model is trained based on a similarity between a keyword feature of a sample query and a text feature of a sample text.

The second candidate text determination unit is used to determine the N candidate texts from the text library according to the N second target text features.

According to an embodiment of the present disclosure, the text in the text library includes a title and a content. The apparatus 800 of retrieving data further includes a second text feature determination module and a second text feature library generation module.

The second text feature determination module is used to process the title and the content by using the second deep learning model to obtain a title feature and a content feature, respectively.

The second text feature library generation module is used to generate the second text feature library according to the title feature and the content feature.

The target text determination module 803 includes a concatenation unit, a similarity determination unit, and a target text determination unit.

The concatenation unit is used to concatenate, for each candidate text, the query to be processed and the candidate text to obtain a concatenated text.

The similarity determination unit is used to determine a similarity between the query to be processed and each candidate text according to the concatenated text.

The target text determination unit is used to determine the at least one target text from the M candidate texts and the N candidate texts according to the similarity between the query to be processed and each candidate text.

FIG. 9 shows a block diagram of an apparatus of training a deep learning model according to an embodiment of the present disclosure.

As shown in FIG. 9, an apparatus 900 of training a deep learning model includes a sample determination module 901, a query processing module 902, a text processing module 903, a similarity determination module 904, a loss determination module 905, and an adjusting module 906.

The sample determination module 901 is used to determine a positive example text of a sample query and a negative example text of the sample query.

The query processing module 902 is used to process the sample query by using the query processing sub-model to obtain a semantic feature of the sample query.

The text processing module 903 is used to process the positive example text and the negative example text by using the text processing sub-model to obtain a feature of the positive example text and a feature of the negative example text, respectively.

The similarity determination module 904 is used to determine a similarity between the sample query and the positive example text and a similarity between the sample query and the negative example text according to the semantic feature, the feature of the positive example text and the feature of the negative example text.

The loss determination module 905 is used to determine a loss of the deep learning model according to the similarity between the sample query and the positive example text and the similarity between the sample query and the negative example text.

The adjusting module 906 is used to adjust a parameter of the deep learning model according to the loss.

The query processing sub-model includes an encoding module, an attention module, and a fully connected module. The query processing module 902 includes an encoding unit, an attention processing unit, and a fully connected processing unit.

The encoding unit is used to input the sample query into the encoding module to obtain a query feature of the sample query.

The attention processing unit is used to input the query feature into the attention module to obtain an attention feature of the sample query.

The fully connected processing unit is used to input the attention feature into the fully connected module to obtain the semantic feature of the sample query.

A plurality of sample queries are provided. The apparatus 900 of training the deep learning model further includes a negative example text set determination module.

The negative example text set determination module is used to determine, for each sample query, the negative example text of the sample query and positive example texts and negative example texts of other sample queries among the plurality of sample queries other than the sample query as a set of negative example texts of the sample query.

The text processing module 903 is used to process the positive example text and each negative example text in the set of negative example texts by using the text processing sub-model to obtain the feature of the positive example text and a feature of each negative example text in the set of negative example texts, respectively.

The loss determination module 905 is used to determine the loss of the deep learning model according to the similarity between the sample query and the positive example text and a similarity between the sample query and each negative example text in the set of negative example texts.

According to an embodiment of the present disclosure, the present disclosure further provides an electronic device, a readable storage medium and a computer program product.

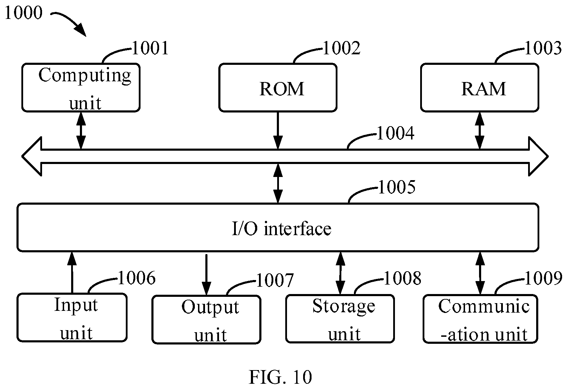

FIG. 10 shows a schematic block diagram of an example electronic device 1000 used to implement embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the device 1000 may include a computing unit 1001, which may perform various appropriate actions and processing based on a computer program stored in a read-only memory (ROM) 1002 or a computer program loaded from a storage unit 1008 into a random access memory (RAM) 1003. Various programs and data required for the operation of the device 1000 may be stored in the RAM 1003. The computing unit 1001, the ROM 1002 and the RAM 1003 are connected to each other through a bus 1004. An input/output (I/O) interface 1005 is further connected to the bus 1004.

Various components in the device 1000, including an input unit 1006 such as a keyboard, a mouse, etc., an output unit 1007 such as various types of displays, speakers, etc., a storage unit 1008 such as a magnetic disk, an optical disk, etc., and a communication unit 1009 such as a network card, a modem, a wireless communication transceiver, etc., are connected to the I/O interface 1005. The communication unit 1009 allows the device 1000 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 1001 may perform the various methods and processes described above, such as at least one of the method of retrieving data and the method of training the deep learning model. For example, in some embodiments, at least one of the method of retrieving data and the method of training the deep learning model may be implemented as a computer software program that is tangibly contained on a machine-readable medium, such as the storage unit 1008. In some embodiments, part or all of a computer program may be loaded and/or installed on the device 1000 via the ROM 1002 and/or the communication unit 1009. When the computer program is loaded into the RAM 1003 and executed by the computing unit 1001, one or more steps of at least one of the method of retrieving data and the method of training the deep learning model described above may be performed. Alternatively, in other embodiments, the computing unit 1001 may be used to perform at least one of the method of retrieving data and the method of training the deep learning model in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a special-purpose or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, and infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of retrieving data, comprising:
determining (S210) M candidate texts from a text library based on a semantic information in a query to be processed, wherein M is an integer greater than or equal to 1;
determining (S220) N candidate texts from the text library based on a keyword information in the query to be processed, wherein N is an integer greater than or equal to 1; and
determining (S230) at least one target text based on the M candidate texts and the N candidate texts.

2. The method according to claim 1, wherein the determining M candidate texts from a text library based on a semantic information in a query to be processed comprises:
determining a semantic feature of the query to be processed;
matching the semantic feature with a text feature in a first text feature library to obtain M first target text features, wherein the text feature in the first text feature library is obtained by processing a text in the text library using a first deep learning model, and the first deep learning model is trained based on a similarity between a semantic feature of a sample query and a text feature of a sample text; and
determining the M candidate texts from the text library based on the M first target text features.

3. The method according to claim 2, wherein the determining a semantic feature of the query to be processed comprises:
determining a query feature of the query to be processed;
performing an attention processing on the query feature to obtain an attention feature; and
determining the semantic feature of the query to be processed according to the attention feature.

4. The method according to claim 2, further comprising:
processing the text in the text library by using the first deep learning model to obtain a feature of the text in the text library; and
generating the first text feature library according to the feature of the text in the text library.

5. The method according to claim 1, wherein the determining N candidate texts from the text library based on a keyword information in the query to be processed comprises:
determining a keyword feature in the query to be processed;
matching the keyword feature with a text feature in a second text feature library to obtain N second target text features, wherein the text feature in the second text feature library is obtained by processing a text in the text library using a second deep learning model, and the second deep learning model is trained based on a similarity between a keyword feature of a sample query and a text feature of a sample text; and
determining the N candidate texts from the text library according to the N second target text features.

6. The method according to claim 5, wherein the text in the text library comprises a title and a content, and the method further comprises:
processing the title and the content by using the second deep learning model to obtain a title feature and a content feature, respectively; and
generating the second text feature library according to the title feature and the content feature.

7. The method according to any one of claims 1 to 6, wherein the determining at least one target text based on the M candidate texts and the N candidate texts comprises:
concatenating, for each candidate text among the M candidate texts and the N candidate texts, the query to be processed and the candidate text to obtain a concatenated text;
determining a similarity between the query to be processed and each candidate text according to the concatenated text; and
determining the at least one target text from the M candidate texts and the N candidate texts according to the similarity between the query to be processed and each candidate text.

8. A method of training a deep learning model, wherein the deep learning model comprises a query processing sub-model and a text processing sub-model, and the method comprises:
determining (S710) a positive example text of a sample query and a negative example text of the sample query;
processing (S720) the sample query by using the query processing sub-model to obtain a semantic feature of the sample query;
processing (S730) the positive example text and the negative example text by using the text processing sub-model to obtain a feature of the positive example text and a feature of the negative example text, respectively;
determining (S740) a similarity between the sample query and the positive example text and a similarity between the sample query and the negative example text according to the semantic feature, the feature of the positive example text and the feature of the negative example text;
determining (S750) a loss of the deep learning model according to the similarity between the sample query and the positive example text and the similarity between the sample query and the negative example text; and
adjusting (S760) a parameter of the deep learning model according to the loss.

9. The method according to claim 8, wherein the query processing sub-model comprises an encoding module (411), an attention module (412), and a fully connected module (413); and the processing the sample query by using the query processing sub-model to obtain a semantic feature of the sample query comprises:
inputting the sample query into the encoding module (411) to obtain a query feature of the sample query;
inputting the query feature into the attention module (412) to obtain an attention feature of the sample query; and
inputting the attention feature into the fully connected module (413) to obtain the semantic feature of the sample query.

10. The method according to claim 8, wherein a plurality of sample queries are provided, and the method further comprises:
determining, for each sample query of the plurality of sample queries, the negative example text of the sample query and positive example texts and negative example texts of other sample queries among the plurality of sample queries other than the sample query as a set of negative example texts of the sample query; and optionally
wherein the processing the positive example text and the negative example text by using the text processing sub-model so as to obtain a feature of the positive example text and a feature of the negative example text comprises:
processing the positive example text and each negative example text in the set of negative example texts by using the text processing sub-model to obtain the feature of the positive example text and a feature of each negative example text in the set of negative example texts, respectively; and
wherein the determining a loss of the deep learning model according to the similarity between the sample query and the positive example text and the similarity between the sample query and the negative example text comprises:
determining the loss of the deep learning model according to the similarity between the sample query and the positive example text and a similarity between the sample query and each negative example text in the set of negative example texts.

11. An apparatus (800) of retrieving data, comprising:
a first candidate text determination module (801) configured to determine M candidate texts from a text library based on a semantic information in a query to be processed, wherein M is an integer greater than or equal to 1;
a second candidate text determination module (802) configured to determine N candidate texts from the text library based on a keyword information in the query to be processed, wherein N is an integer greater than or equal to 1; and
a target text determination module (803) configured to determine at least one target text based on the M candidate texts and the N candidate texts.

12. A apparatus (900) of training a deep learning model, wherein the deep learning model comprises a query processing sub-model and a text processing sub-model, and the apparatus comprises:
a sample determination module (901) configured to determine a positive example text of a sample query and a negative example text of the sample query;
a query processing module (902) configured to process the sample query by using the query processing sub-model to obtain a semantic feature of the sample query;
a text processing module (903) configured to process the positive example text and the negative example text by using the text processing sub-model, so as to obtain a feature of the positive example text and a feature of the negative example text;
a similarity determination module (904) configured to determine a similarity between the sample query and the positive example text and a similarity between the sample query and the negative example text according to the semantic feature, the feature of the positive example text and the feature of the negative example text;
a loss determination module (905) configured to determine a loss of the deep learning model according to the similarity between the sample query and the positive example text and the similarity between the sample query and the negative example text; and
an adjusting module (906) configured to adjust a parameter of the deep learning model according to the loss.

13. An electronic device (1000), comprising:
at least one processor; and
a memory communicatively connected to the at least one processor, wherein the memory stores instructions executable by the at least one processor, and the instructions, when executed by the at least one processor, are configured to cause the at least one processor to implement the method of any one of claims 1 to 10.

14. A non-transitory computer-readable storage medium having computer instructions stored thereon, wherein the computer instructions are configured to cause a computer to implement the method of any one of claims 1 to 10.

15. A computer program product containing a computer program, wherein the computer program is stored on a readable storage medium and/or an electronic device (1000), and the computer program, when executed by a processor, is configured to implement the method of any one of claims 1 to 10.
